# EUROPÄISCHE PATENTSCHRIFT

(11) **EP 3 126 402 B1**
(45) Veröffentlichungstag und Bekanntmachung des Hinweises auf die Patenterteilung: **02.05.2018**
(21) Anmeldenummer: 15713323.2
(22) Anmeldetag: 27.03.2015
(51) Int. Cl.: C09J 5/00, C09J 11/02, C08K 3/34, C08K 5/00

(54) **VERFAHREN ZUR PLASMA-INITIIERTEN VERKLEBUNG**
METHOD FOR PLASMA-INITIATED ADHESIVE BONDING
PROCÉDÉ DE COLLAGE AMORCÉ PAR PLASMA

(30) Priorität: 01.04.2014 DE 102014206220
(43) Veröffentlichungstag der Anmeldung: 08.02.2017
(73) Patentinhaber: tesa SE, 22848 Norderstedt (DE)
(72) Erfinder: HÄHNEL, Marcel, 22851 Norderstedt (DE)
(86) Internationale Anmeldenummer: PCT/EP2015/056701
(87) Internationale Veröffentlichungsnummer: WO 2015/150251

(56) Entgegenhaltungen:
- EP-A1- 0 193 006
- US-A- 4 212 719
- US-A1- 2009 081 469
- US-B1- 6 747 102

## Beschreibung

Die Erfindung betrifft ein Verfahren zur Herstellung einer Verklebung, wobei als Klebstoff eine Zusammensetzung enthaltend zumindest eine polymerisierbare Monomersorte und eine katalytisch aktive Substanz eingesetzt werden.

Zur Erzielung hoher Klebefestigkeiten werden häufig aushärtende Klebesysteme eingesetzt, bei denen durch Polyreaktionen eine Aushärtung der als Klebemasse eingesetzten Zusammensetzung stattfindet, wodurch die dauerhafte Fügung der Klebepartner miteinander bewirkt wird.

Eine Art aushärtender Systeme sind Zweikomponentenklebesysteme. Diese Klebesysteme sind allgemein seit Jahren bekannt und in der Fachliteratur eingehend beschrieben. Ein aus zwei Komponenten bestehendes Klebstoff-System wird auf die zu verklebenden Teile aufgetragen, wobei üblicherweise zwei flüssige Komponenten zum Einsatz kommen. Beispielsweise bestehen bei chemisch reagierenden 2-Komponenten-Polymerisationsklebesystemen die eine Komponente aus dem zu polymerisierenden Monomer und einem Aktivator und die andere Komponente aus einer radikalbildenden Substanz (auch Härter oder Initiator genannt) und dem zu polymerisierenden Monomer. Nach Durchmischen oder zumindest Kontaktieren der beiden Komponenten und gegebenenfalls einer Aktivierung, die meist thermisch erfolgt, wird die radikalbildende Substanz durch den Aktivator in zwei Radikale aufgespalten und die Polymerisationsreaktion der zu polymerisierenden Monomere beginnt. Die Radikalkettenpolymerisation des Monomers findet anschließend bis zu einem Kettenabbruch statt und die Klebemasse härtet aus, wodurch eine dauerhafte Verklebung der zu verklebenden Teile erreicht wird.

Nachteil derartiger flüssiger 2-Komponenten-Polymerisations-klebesysteme ist, dass ihre Anwendung oft unsauber erfolgt, da die beiden Komponenten meist flüssig bis pastös auf die zu verklebenden Teile aufgetragen werden müssen. Dies ist vor allem bei großflächigen Verklebungen und/oder bei solchen Anwendungen problematisch, bei denen die Oberflächen uneben, z.B. geneigt, sind. Außerdem erfolgt die Aktivierung des Klebstoffsystems in der Regel bei erhöhten Temperaturen, was für empfindliche Substrate, wie z.B. eloxiertes Aluminium, problematisch sein kann. Ein weiterer Nachteil derartiger Systeme ist, dass die Lagerstabilität der beiden Komponenten kritisch sein kann. Darüber hinaus gehen herkömmliche 2-Komponenten-Polymerisations-Klebesysteme nach vollständigem Aushärten häufig mit Problemen einher, die erst bei Erschütterungen sichtbar werden. So kann es bei den Systemen des Standes der Technik im Bereich der Verklebungen durch starke Erschütterungen zu Rissen oder Brüchen kommen.

Eine Alternative, insbesondere um eine bessere Handhabbarkeit zu gewährleisten, ist der Einsatz filmförmiger aushärtender Systeme. Diese werden in polymerer Form eingesetzt, damit der Klebefilm die notwendige Eigenstabilität aufweist. Durch reaktive Gruppen in der Klebemassenzusammensetzung kann die Härtungsreaktion bewirkt werden. Die Härtung wird insbesondere durch thermische Energie initiiert (sogenannte hitzeaktivierbare Klebefilme). Die hiermit verbundene Problematik für empfindliche Systeme, wie etwa Kunststoffe, wurde vorstehend bereits erwähnt.

Bei Raumtemperatur lassen sich haftklebrige Klebefilme einsetzen, bei denen die Verklebung durch eine der Klebemasse innewohnende Eigenklebrigkeit bewirkt wird. Diese Systeme erzielen aber in der Regel nicht die Verklebungsfestigkeiten wie aushärtende Systeme.

Die Niederdruckplasma-Behandlung ist ein bekanntes Verfahren zur Oberflächenvorbehandlung von Klebemassen. Das Plasma führt zu einer Aktivierung der Oberfläche im Sinne einer höheren Reaktivität. Dabei kommt es zu chemischen Veränderungen der Oberfläche, wodurch zum Beispiel das Verhalten der Klebemasse gegenüber polaren und unpolaren Oberflächen beeinflusst werden kann. Bei dieser Vorbehandlung handelt es sich im Wesentlichen um Oberflächenphänomene, nicht um Reaktionen im Inneren der Klebeschicht.

Im Stand der Technik ist auch die grundsätzliche Möglichkeit beschrieben, Polyreaktionen durch das Einwirken von Plasma zu initiieren.
Die EP 193 006 A beschreibt die Polymerisation von Monomeren in flüssigem und gasförmigem Zustand unter Einwirken eines Plasmas. Es werden Photoinitiatoren oder Vernetzer zugesetzt. Die Monomere werden jedoch nur bis zu Umsätzen von geringen zweistelligen Prozentzahlen umgesetzt. Nicht umgesetzte Monomere müssen aus dem Polymer wieder aufwendig ausgewaschen werden.
Eine durch Plasma im Niederdruckverfahren getriggerte Polymerisation ohne Einsatz von Photoinitiatoren oder Vernetzern wird in US 4,212,719 A beschrieben. Es wird ein Fortschreiten der Polymerisation auch nach Abschalten der Plasmabehandlung beschrieben. Die genannten Zeiten für die Postplasmapolymerisation liegen im Bereich von teils deutlich mehr als 2 Tagen. Auch in dieser Schrift werden nur geringe Monomerumsätze erreicht.
Daher sind die vorgenannten Verfahren für den Einsatz aushärtender Klebemassen, die zu hohen Verklebungsfestigkeiten führen sollen, nicht einsetzbar.

Aufgabe der Erfindung ist es, ein Verfahren zur Verklebung auf einem Substrat oder zweier oder mehrerer Substrate miteinander anzubieten, bei dem eine hohe Verklebungsfestigkeit auch bei moderaten Aktivierungstemperaturen erzielt werden kann.

Die Aufgabe wird gelöst durch ein Verfahren zur Herstellung einer Verklebung mittels eines Klebstoffs, wobei als Klebstoff eine Zusammensetzung enthaltend zumindest a) eine in radikalischen Polyreaktionen reaktive Substanzen und b) zumindest ein Metallkomplex aus der Gruppe der Metallphthalocyanine und/oder aus der Gruppe der Metallporphyrine als katalytisch aktive Substanz eingesetzt wird, wobei zur Verklebung eine Polyreaktion der reaktiven Substanz (a) erfolgt, die durch Einwirken eines Plasmas initiiert wird.

Als Klebstoff wird dementsprechend in dieser Schrift eine chemische Zusammensetzung verstanden, die entweder sofort oder erst durch eine Aktivierung, durch chemische Reaktion ihrer Komponenten untereinander und/oder mit weiteren Reaktionspartner (wie etwa den Oberflächen der zu verklebenden Substrate), eine Verklebung bewirken kann (Reaktionsklebstoffe). Als Klebstoffe werden auch solche chemischen Zusammensetzungen verstanden, die aus sich heraus eine hinreichende Eigenklebrigkeit aufweisen, um eine Verklebung bewirken zu können, gegebenenfalls unter Einwirkung eines mehr oder weniger großen Anpressdrucks (druckempfindliche Klebmassen oder Selbstklebmassen). Auch Reaktionsklebstoffe können, müssen aber nicht, vor einer solchen Aktivierung klebrig sein.
Der Begriff "Klebemittel" beschreibt die Darreichungsform und die Anwendungsform des Klebstoffs, indem die so bezeichneten Objekte nämlich den Klebstoff umfassen und somit grundsätzlich - gegebenenfalls nach Aktivierung - in der Lage sind, über den Klebstoff eine Verklebung zu bewirken. Klebemittel können ausschließlich aus dem Klebstoff bestehen oder weitere Komponenten enthalten.
Entsprechend werden die Begriffe Klebefilm und Klebeband im Sinne film- bzw. bandförmiger Klebemittel verwendet
Der Ausdruck "klebfähig" soll die Eigenschaft beschreiben, mittels eines zu dem bezeichneten Objekt zugehörigen Klebstoffs grundsätzlich eine Verklebung bewirken zu können, gegebenenfalls nach Aktivierung des Klebstoffs. Hingegen ist mit "klebrig", synonym auch "haftklebrig" und "selbstklebrig", die Eigenschaft gemeint, bei Raumtemperatur eine Eigenklebrigkeit aufzuweisen.
Erfindungsgemäß handelt es sich insbesondere um einen Reaktionsklebstoff.

Als in radikalischen Polyreaktionen reaktive Substanzen können solche Verbindungen eingesetzt werden, die im Rahmen von radikalisch ablaufenden Verknüpfungsreaktionen (Ketten- bzw. Polymeraufbaureaktionen und Netzbildungsreaktionen) zu hochmolekularen Verbindungen (insbesondere Makromolekülen und Netzwerken) reagieren können, aus denen also über radikalische Polyreaktionen Makromoleküle und/oder Polymernetzwerke aufgebaut werden können. Die Polyreaktionen können als stufenlos verlaufende Polyreaktion oder als in Stufen verlaufende Polyreaktion verlaufen. Die Polyreaktion verläuft bevorzugt als Polymerisation nach einem radikalischen Kettenwachstumsmechanismus. Prinzipiell können auch andere Polymeraufbaureaktionen, insbesondere Stufenwachstumsreaktionen, stattfinden, wie beispielweise Polyadditionen oder Polykondensationen.
Als Polymere im Rahmen dieser Schrift werden Substanzen verstanden, die sich aus einem Kollektiv chemisch einheitlich oder ähnlich aufgebauter, sich in der Regel aber hinsichtlich Polymerisationsgrad, Molmasse und Kettenlänge unterscheidender Makromoleküle zusammensetzt. "Chemisch einheitlicher Aufbau" soll auch den Fall statistisch aufgebauter Monomere umfassen, bei denen die Zusammensetzung der konstituierenden Einheiten im Wesentlichen identisch ist, die konkrete Einheitenabfolge in den Makromonomeren aber aufgrund der statistischen Abfolge von Makromolekül zu Makromolekül variieren kann.
Als Polymer-Netzwerke (oder auch nur als Netzwerke) werden solche Polymere bezeichnet, deren molekularer Aufbau - insbesondere durch Verknüpfung zwischen den ursprünglich vorliegenden Makromolekülen - der Form eines zwei- oder dreidimensionalen Netzwerkes gleichkommt und die so letztlich ein einziges oder wenige Riesenmoleküle bildet (vgl. RÖMPP online 2014). Die Begriffe "Polymer-Netzwerk" und "vernetzte Polymere" werden im Rahmen dieser Schrift synonym verstanden.
Da sowohl die Polymeraufbaureaktionen und Netzbildungsreaktionen zu einer Kohäsionssteigerung der Klebstoffzusammensetzung führen, bewirkt die Polyreaktion der Monomere somit insbesondere eine Härtung des Klebstoffs.

In einer besonders bevorzugten Vorgehensweise wird der Klebstoff filmförmig, also als Klebeband oder als Teil eines Klebebandes, eingesetzt. Da die Monomere - auch in Abmischung mit den katalytisch aktiven Substanzen - in der Regel keine hinreichende Kohäsion aufweisen, um als selbsttragender Film ausgebildet zu werden, wird vorteilhaft zur Verklebung ein Klebemittel eingesetzt, bei dem der Klebstoff - also die Monomere und die Metallchelate und gegebenenfalls weiter vorhandene Klebstoff-Bestandteile - in einer Matrix vorliegt, die im Folgenden als Filmbildner-Matrix bezeichnet wird.

Zur Erzeugung einer hinreichenden Kohäsion des Klebstoffs kann diesem auch ein Verdickungsmittel zugesetzt sein, so dass er entweder bereits aus sich selbst heraus - also ohne eine zusätzliche Matrix - oder wie vorstehend beschrieben in einer Matrix selbsttragend ausgeformt werden kann, insbesondere in Form eines Klebefilms.

### Reaktive Substanz

Der für das erfindungsgemäße Verfahren eingesetzte Klebstoff umfasst solche reaktiven Substanzen, die in Polyreaktionen als Monomere reagieren können (auch als "reaktive Monomere" bezeichnet). Als in radikalischen Polyreaktionen reaktive Substanzen können niedermolekulare Verbindungen mit einer oder mehreren funktionellen Gruppen, also Monomere im eigentlichen Wortsinn, eingesetzt werden. Stattdessen oder zusätzlich können aber auch Makromonomere - Oligomere oder kurzkettige Polymere (zum Beispiel mit zahlenmittleren Molekulargewichten Mₙ von nicht mehr als 10 000 g/mol) mit einer oder mehreren funktionellen Gruppen, vorzugsweise an einem Ende oder an unterschiedlichen Enden des meist kettenförmigen Moleküls - eingesetzt werden. Sofern im Rahmen dieser Schrift von "Monomeren" die Rede ist, sind damit alle in radikalischen Polyreaktionen reaktive Substanzen gemeint, also sowohl niedermolekulare Monomere im eigentlichen Wortsinn als auch Makromonomere, sofern nicht im Einzelnen anders dargelegt. Dabei beschreibt der Begriff "Monomer" nicht das einzelne Molekül, sondern die jeweilige Monomersorte, sofern sich aus dem Sachverhalt nichts anderes ergibt.

In radikalischen Polyreaktionen reaktive Substanzen, also reaktive Monomere, können beispielweise als Flüssigkeiten unterschiedlicher Viskositäten oder beispielsweise als Harze eingesetzt werden. Der Begriff "Harz" umfasst nach der DIN 55947 "feste, harte bis weiche, organische, nichtkristalline Produkte mit mehr oder weniger breiter Molekulargewichtsverteilung". Die Harz-Moleküle weisen - als sogenannte Reaktivharze - vollständig oder teilweise solche funktionellen Gruppen auf, die unter Aktivierung in den oben genannten Polyreaktionen reagieren können.

Der erfindungsgemäß eingesetzte Klebstoff umfasst zumindest ein reaktives Monomer (also eine Monomersorte). Erfindungsgemäß vorteilhaft können auch zwei oder mehrere reaktive Monomere (Monomersorten) eingesetzt werden.

Erfindungsgemäß vorteilhaft werden die reaktiven Monomere ausgewählt aus der Gruppe bestehend aus Acrylsäure, Acrylsäureester, Methacrylsäure, Methacrylsäureester, Vinylverbindungen und/oder oligomere bzw. polymere Verbindungen mit Kohlenstoff-Kohlenstoff-Doppelbindungen.

In einer bevorzugten Ausführungsform werden als reaktive Monomere ein oder mehrere Vertreter ausgewählt aus der Gruppe, bestehend aus: Methylmethacrylat (CAS-Nr. 80-62-6), Methacrylsäure (CAS-Nr. 79-41-4), Cyclohexylmethacrylat (CAS-Nr. 101-43-9), Tetrahydrofurfuryl-methacrylat (CAS-Nr. 2455-24-5), 2-Phenoxyethylmethacrylat (CAS-Nr. 10595-06-9), Di-(ethylenglykol)methylethermethacrylat (CAS-Nr. 45103-58-0) und/oder Ethylenglykoldimethacrylat (CAS-Nr. 97-90-5).

In einer weiteren bevorzugten, erfindungsgemäßen Ausführungsform enthält das Klebemittel eine Mischung von Cyclohexylmethacrylat, Tetrahydrofurfurylmethacrylat, Methacrylsäure und Ethylenglykoldimethacrylat als reaktive Monomere.

In einer weiteren bevorzugten, erfindungsgemäßen Ausführungsform enthält das Klebemittel eine Mischung von Methylmethacrylat, Methacrylsäure und Ethylenglykoldimethacrylat als reaktive Monomere.

In einer weiteren bevorzugten, erfindungsgemäßen Ausführungsform enthält das Klebemittel eine Mischung von 2-Phenoxyethylmethacrylat und Ethylenglykoldimethacrylat als reaktive Monomere.

In einer weiteren bevorzugten, erfindungsgemäßen Ausführungsform enthält das Klebemittel eine Mischung von Di-(ethylenglykol)methylethermethacrylat und Ethylenglykoldimethacrylat als reaktive Monomere.

Als Makromonomere können beispielsweise oligomere mono-, di-, tri- und höher funktionalisierte (Meth)acrylate ausgewählt werden. Sehr vorteilhaft werden diese im Gemisch mit einem oder mehreren Monomeren aus der Gruppe bestehend aus Acrylsäure, Acrylsäureester, Methacrylsäure, Methacrylsäureester, Vinylverbindungen eingesetzt.

Jede dieser bevorzugten Ausführungsformen kann erfindungsgemäß mit einem thermoplastischen Polyurethan, wie z.B. Desmomelt 530®, als polymere Filmbildner-Matrix kombiniert werden.

Es ist vorteilhaft, wenn wenigstens ein Teil der eingesetzten reaktiven Monomere solche chemischen Verbindungen sind, die zusätzlich zur polymerisierbaren funktionellen Gruppe weitere reaktionsfähige, funktionelle Gruppen aufweisen und somit imstande sind, lineare Molekülketten mit diesen weiteren Gruppen zu versehen, damit sich aus den zweidimensionalen Strukturen über Ausbildung intermolekularer Brücken über diese weiteren funktionellen Gruppen dreidimensional-vernetzte Strukturen bilden können.
In einer besonders bevorzugten, erfindungsgemäßen Ausführungsform wird Ethylenglykoldimethacrylat (CAS-Nr. 97-90-5) als reaktives Monomer eingesetzt, insbesondere bevorzugt in Kombination mit weiteren reaktiven Monomeren.

### Katalytisch aktive Substanz

Zur Initiierung der Polyreaktion hat es sich als sehr vorteilhaft herausgestellt, dem Klebstoff eine katalytisch wirksame Substanz oder mehrere katalytisch wirksame Substanzen zuzusetzen. Die katalytisch aktiven Substanzen werden während der Polyreaktion selbst nicht verbraucht.

Zumindest eine der katalytisch wirksamen Substanzen wird gewählt aus der Gruppe, die aus Metallphthalocyaninen und Metallporphyrinen gebildet ist. Vorteilhaft werden alle eingesetzten katalytisch wirksamen Substanzen zu Metallphthalocyaninen und/oder Metallporphyrinen gewählt.

In sehr bevorzugter Weise werden die Metalle der Metallphthalocyanine, sofern solche Komplexe eingesetzt werden, gewählt aus der Gruppe gebildet aus Eisen, Cobalt, Kupfer, Nickel, Aluminium, Magnesium, Mangan, Zinn, Zink.

In sehr bevorzugter Weise werden die Metalle der Metallporphyrine, sofern solche Komplexe eingesetzt werden, gewählt aus der Gruppe gebildet aus Eisen, Cobalt, Kupfer, Nickel, Aluminium, Magnesium, Mangan, Zinn, Zink.

In einer sehr bevorzugten Vorgehensweise wird Eisen(II)phthalocyanin [C₃₂H₁₆FeN₈] (CAS-Nr. 132-16-1) - insbesondere ausschließlich, möglich aber auch in Kombination mit einem oder mehreren weiteren Metallphthalocyaninen und/oder einem oder mehreren weiteren Metallporphyrinen - als katalytsich wirksame Substanz eingesetzt. Eine vorteilhafte Kombination aus katalytisch wirksamen Substanzen ist beispielweise die aus Eisenphthalocyanin und einem oder mehreren Eisenporphyrinen.

Die katalytisch wirksame Substanz(en), wie beispielsweise Eisen(II)phthalocyanin, wird bzw. werden vorzugsweise in einer Menge von bis zu 2-Gew.-Teilen auf 100 Gew.-Teile reaktive Monomere eingesetzt, besonders bevorzugt in einer Menge von 0,1 bis 1 Gew.-Teilen auf 100 Gew.-Teile reaktive Monomere.

### Filmbildner-Matrix

In einer vorteilhaften Vorgehensweise werden die in radikalischen Polyreaktionen reaktiven Substanzen in einer Filmbilder-Matrix eingesetzt, so dass ein Klebemittel umfassend zumindest die Matrix und den Klebstoff resultiert. Die Filmbildner-Matrix kann sehr vorteilhaft durch ein Polymer gebildet werden, also als polymere Filmbildner-Matrix vorliegen. In der Matrix sind die reaktiven Monomere, die katalytisch aktive Substanzen sowie eventuelle weitere Bestandteile des Klebstoffs enthalten. In einer bevorzugten erfindungsgemäßen Ausführungsform enthält die Matrix ausschließlich die reaktiven Monomere und die katalytisch aktive(n) Substanz(en).

Aufgabe dieser Matrix ist es, ein inertes Grundgerüst für den Klebstoff zu bilden, so dass dieser insbesondere nicht flüssig vorliegt, sondern in einem Film oder einer Folie eingelagert ist. Auf diese Art und Weise wird eine einfachere Handhabung gewährleistet.

Das Matrix-Polymer wird bevorzugt derart gewählt, dass es für die Polyreaktionen inert ist. Inert bedeutet in diesem Zusammenhang, dass die reaktiven Monomere unter geeignet gewählten Bedingungen im Wesentlichen nicht mit der polymeren Filmbildner-Matrix reagieren.

Geeignete Filmbildner-Matrices zur Verwendung in der vorliegenden Erfindung sind vorzugsweise ausgewählt aus der folgenden Liste: ein thermoplastisches Polymer, wie z.B. ein Polyester bzw. Copolyester, ein Polyamid bzw. Copolyamid, ein Polyacrylsäureester, ein Acrylsäureester-Copolymer, ein Polymethacrylsäureester, ein Methacrylsäureester-Copolymer, thermoplastische Polyurethane sowie chemisch oder physikalisch vernetzte Stoffe der zuvor genannten Verbindungen. Darüber hinaus können auch Blends aus verschiedenen thermoplastischen Polymeren eingesetzt werden.
Um den Verbund der erfindungsgemäßen Klebesysteme mit dem zu fügenden Substrat bzw. den zu fügenden Substraten nach der Plasmaaktivierung bis zur Ausbildung der erforderlichen Verklebungsfestigkeit zu stabilisieren, kann es vorteilhaft sein, die Matrix haftklebrig auszubilden, also derart, dass sie selbst eine Eigenklebrigkeit - insbesondere bei Raumtemperatur - aufweist. Hierfür kann auf die dem Fachmann geläufigen Haftklebesysteme zurückgegriffen werden, etwa auf entsprechende Polyacrylate und Polyurethane.

Weiterhin sind auch Elastomere und thermoplastische Elastomere alleinig oder im Gemisch als polymere Filmbildner-Matrix denkbar. Bevorzugt werden thermoplastische Polymere, insbesondere semikristalline.

Besonders bevorzugt sind thermoplastische Polymere mit Erweichungstemperaturen kleiner als 100°C. In diesem Zusammenhang steht der Begriff Erweichungspunkt für die Temperatur, ab der das thermoplastische Granulat mit sich selbst verklebt. Wenn es sich bei dem Bestandteil der polymeren Filmbildner-Matrix um ein semikristallines thermoplastisches Polymer handelt, dann weist es sehr bevorzugt neben seiner Erweichungstemperatur (die mit dem Schmelzen der Kristallite zusammenhängt) eine Glasübergangstemperatur von höchstens 25 °C, bevorzugt höchstens 0 °C auf.

In einer bevorzugten, erfindungsgemäßen Ausführungsform wird ein thermoplastisches Polyurethan eingesetzt. Vorzugsweise besitzt das thermoplastische Polyurethan eine Erweichungstemperatur von kleiner als 100°C, insbesondere kleiner als 80°C.

In einer besonders bevorzugten, erfindungsgemäßen Ausführungsform wird Desmomelt 530® als polymere Filmbildner-Matrix eingesetzt, das im Handel bei der Bayer Material Science AG, 51358 Leverkusen, Deutschland, erhältlich ist. Desmomelt 530® ist ein hydroxyl-terminiertes, weitgehend lineares, thermoplastisches, stark kristallisierendes Polyurethan-Elastomer.

Die Menge der polymeren Filmbildner-Matrix liegt erfindungsgemäß bevorzugt im Bereich von etwa 20-80 Gew.%, bevorzugt etwa 30-50 Gew.%, bezogen auf die Gesamtmischung der Bestandteile des Klebemittels. Am stärksten bevorzugt werden 35-45 Gew.%, bevorzugt etwa 40 Gew.% der polymeren Filmbildner-Matrix, bezogen auf die Gesamtmischung der Bestandteile des Klebemittels, eingesetzt.
Die Menge der Monomere in der Filmbildner-Matrix liegt erfindungsgemäß bevorzugt im Bereich von etwa 20-80 Gew.%, bevorzugt etwa 40-60 Gew.%, bezogen auf die Gesamtmischung der Bestandteile des Klebemittels. Am stärksten bevorzugt werden etwa 40-50 Gew.% des Monomers, bezogen auf die Gesamtmischung der Bestandteile des Klebemittels, eingesetzt.
Die Gesamtmischung des Klebemittels steht hier für die gesamte Menge der eingesetzten Filmbildner-Matrix, der reaktiven Monomere, der katalytisch aktiven Substanz sowie weiterer optional vorliegender Komponenten, die als Summe (in Gew.%) erhalten wird.

### Verdickungsmittel

In einer weiteren vorteilhaften Vorgehensweise wird die Viskosität der in radikalischen Polyreaktionen reaktiven Substanzen signifikant mit einem Verdickungsmittel erhöht. Grundsätzlich können hier alle dem Fachmann geläufigen Verdickungsmittel gewählt werden, solange sie mit der polymeren Matrix, den Monomer und den Lösungsmittel verträglich sind. Die Menge des eingesetzten Verdickungsmittels ist von dessen Art abhängig und kann je nach gewünschtem Viskositätsgrad vom Fachmann gewählt werden.

### Weitere Additive

Die Klebstoffe der vorliegenden Erfindung können gegebenenfalls weitere Additive und/oder Hilfsstoffe enthalten, die im Stand der Technik bekannt sind. Hier sind beispielsweise Füllstoffe, Farbstoffe, Keimbildner, rheologische Additive, Blähmittel, klebverstärkende Additive (Haftvermittler, Tackifier-Harze (Klebharze)), Compoundierungsmittel, Weichmacher und/oder Alterungs-, Licht- und UV-Schutzmittel, zum Beispiel in Form von primären und sekundären Antioxidantien zu nennen.

Als erfindungsgemäß sehr vorteilhaft hat es sich herausgestellt, wenn den Klebstoffen eine oder mehrerer solcher Substanzen beigefügt sind, die zur Sorption permeationsfähiger Substanzen - wie Wasserdampf oder Sauerstoff- befähigten sind. Solche Materialien werden als Gettermaterialien oder auch kurz als Getter bezeichnet. Unter einem Gettermaterial wird dementsprechend in der vorliegenden Schrift ein Material verstanden, das mindestens eine permeationsfähige Substanz selektiv aufnehmen kann. Das Gettermaterial ließe sich daher auch als "Sorbens" oder als "Sorptionsmittel" bezeichnen. Vorzugsweise ist das Gettermaterial mindestens zur Sorption von Wasser befähigt.

Durch die Zugabe von Gettern konnte die Zeit bis zum Aushärten des Klebstoffs wesentlich verkürzt werden, ohne dass die Verarbeitungszeit stark erniedrigt wurde.

Die Gettermaterialien werden ihrer Funktion entsprechend bevorzugt als im Wesentlichen von Permeaten freie Materialien eingesetzt, zum Beispiel wasserfrei. Dies unterscheidet Gettermaterialien von ähnlichen Materialien, die als Füllstoff eingesetzt werden. So wird Silica z.B. in der Form von pyrogener Kieselsäure häufig als Füllstoff eingesetzt. Wird dieser Füllstoff jedoch wie üblich unter Umgebungsbedingungen gelagert, nimmt er bereits Wasser aus der Umgebung auf und ist nicht mehr in technisch nutzbarem Umfang als Gettermaterial funktionsfähig. Erst getrocknetes oder trocken gehaltenes Silica kann als Gettermaterial genutzt werden. Es ist erfindungsgemäß jedoch auch möglich, bereits teilweise mit Permeaten komplexierte Materialien zu verwenden, beispielsweise CaSO₄*1/2H₂O (Calciumsulfat-Halbhydrat) oder teilhydrierte Kieselsäuren, die per Definition als Verbindungen der allgemeinen Formel (SiO₂)ₘ*nH₂O vorliegen.

Geeignete Gettermaterialien sind beispielsweise: Salze wie Cobaltchlorid, Calciumchlorid, Calciumbromid, Lithiumchlorid, Lithiumbromid, Magnesiumchlorid, Bariumperchlorat, Magnesiumperchlorat, Zinkchlorid, Zinkbromid, Kieselsäuren (zum Beispiel Silica Gel), Aluminiumsulfat, Calciumsulfat, Kupfersulfat, Bariumsulfat, Magnesiumsulfat, Lithiumsulfat, Natriumsulfat, Cobaltsulfat, Titansulfat, Natriumdithionit, Natriumcarbonat, Kaliumdisulfit, Kaliumcarbonat, Magnesiumcarbonat, Titandioxid, Kieselgur, Zeolithe, Schichtsilikate wie Montmorillonit und Bentonit, Metalloxide wie Bariumoxid, Calciumoxid, Eisenoxid, Magnesiumoxid, Natriumoxid, Kaliumoxid,Strontiumoxid, Aluminiumoxid (aktiviertes Alumina); weiter Kohlenstoffnanoröhrchen, Aktivkohle, Phosphorpentoxid und Silane; leicht oxidierbare Metalle wie beispielsweise Eisen, Calcium, Natrium und Magnesium; Metallhydride wie beispielsweise Calciumhydrid, Bariumhydrid, Strontiumhydrid, Natriumhydrid und Lithiumaluminiumhydrid; Hydroxide wie Kaliumhydroxid und Natriumhydroxid, Metallkomplexe wie zum Beispiel Aluminiumacetylacetonat; des Weiteren organische Absorber, beispielsweise Polyolefin-Copolymere, Polyamid-Copolymere, PET-Copolyester, Anhydride von einfachen und mehrfachen Carbonsäuren wie Essigsäureanhydrid, Propionsäureanhydrid, Buttersäureanhydrid oder Methyltetrahydro-phtalsäureanhydrid, Isocyanate oder weitere auf Hybridpolymeren basierte Absorber, die meist in Kombination mit Katalysatoren wie beispielsweise Cobalt verwendet werden; weitere organische Absorber wie etwa schwach vernetzte Polyacrylsäure, Polyvinylalkohol, Ascorbate, Glucose, Gallussäure oder ungesättigte Fette und Öle.
Erfindungsgemäß können auch Mischungen aus zwei oder mehreren Gettermaterialien eingesetzt werden.

Unter Kieselsäuren werden, wie vorstehend beschrieben, Verbindungen der allgemeinen Formel (SiO2)m*nH2O verstanden. Es handelt sich dabei um durch nasschemische, thermische oder pyrogene Verfahren hergestelltes Siliciumdioxid. Insbesondere sind unter den Kieselsäuren Kieselgele beziehungsweise Silicagele, beispielsweise mit Kobalt-Verbindungen als Feuchteindikator imprägnierte Kieselgele (Blaugel), und pyrogene Kieselsäuren geeignete Gettermaterialien. Von den SiO2-Verbindungen ist ferner Kieselgur geeignet, das jedoch allgemein nicht den Kieselsäuren zugerechnet wird.
Unter "Silanen" werden Verbindungen der allgemeinen Formel Rₐ-Si-X₄₋ₐ oder deren partielle Kondensationsprodukte verstanden. In der Formel steht a für eine ganze Zahl von 0 bis 3 und bevorzugt für 0 oder 1. X steht für eine hydrolysierbare Gruppe, beispielsweise und bevorzugt für ein Halogen-Atom, insbesondere Chlor, eine AlkoxyGruppe wie beispielsweise eine Methoxy-, Ethoxy-, n-Propoxy-, iso-Propoxy-, n-Butoxy-, sec-Butoxy- oder tert-Butoxy-Gruppe oder für eine Acetoxy-Gruppe. Weitere, dem Fachmann bekannte Beispiele für hydrolysierbare Gruppen sind im Sinne der vorliegenden Erfindung ebenfalls einsetzbar. Sind mehrere Substituenten X vorhanden, so können diese gleich oder voneinander verschieden sein. R steht für einen gegebenenfalls substituierten Kohlenwasserstoffrest. Sind mehrere Substituenten R vorhanden, so können diese gleich oder voneinander verschieden sein.
Unter "Carbodiimiden" werden Verbindungen der allgemeinen Formel R¹-N=C=N-R² verstanden, wobei R¹ und R² organische Reste, insbesondere Alkyl- oder Arylreste sind, die gleich oder verschieden sein können.

Bevorzugt sind die eingesetzten Gettermaterialien ausgewählt aus der Gruppe umfassend
- Cobaltchlorid, Calciumchlorid, Calciumbromid, Lithiumchlorid, Lithiumbromid, Magnesiumchlorid, Bariumperchlorat, Magnesiumperchlorat, Zinkchlorid, Zinkbromid, Aluminiumsulfat, Calciumsulfat, Kupfersulfat, Bariumsulfat, Magnesiumsulfat, Lithiumsulfat, Natriumsulfat, Cobaltsulfat, Titansulfat, Natriumcarbonat, Kaliumcarbonat, Magnesiumcarbonat
- Kieselgur, Kieselsäuren, Zeolithe, Schichtsilikate
- Eisen, Calcium, Natrium, Magnesium, Bariumoxid, Calciumoxid, Eisenoxid, Magnesiumoxid, Natriumoxid, Titandioxid, Kaliumoxid, Strontiumoxid, aktiviertes Aluminiumoxid
- Kohlenstoffnanoröhrchen, Aktivkohle, Phosphorpentoxid, Silane
- Calciumhydrid, Bariumhydrid, Strontiumhydrid, Natriumhydrid und Lithiumaluminiumhydrid Kaliumhydroxid, Natriumhydroxid sowie Aluminiumacetylacetonat
- Polyolefin-Copolymere, Polyamid-Copolymere, PET-Copolyester,
- Essigsäureanhydrid, Propionsäureanhydrid, Buttersäureanhydrid, Methyltetrahydrophtalsäureanhydrid,
- Polyacrylsäure und Polyvinylalkohol,
da diese Materialien sich gut als Wassergetter eignen.

Ganz besonders bevorzugt sind die eingesetzten Gettermaterialien ausgewählt aus Calciumoxid, Calciumsulfat, Calciumchlorid und Zeolithen sowie aus Mischungen von zwei oder mehreren der vorstehenden Substanzen. Diese Materialien weisen besonders hohe Kapazitäten für die Aufnahme von Wasser und weiteren Permeaten auf, sind größtenteils regenerierbar, lassen sich hervorragend in die Klebemasse einarbeiten und beeinträchtigen die Funktion dieser Schicht in der erfindungsgemäßen Menge gar nicht beziehungsweise nur in vernachlässigbarer Art und Weise.

Vorteilhaft beträgt der Anteil der Gettermaterialien in dem Klebstoff nicht mehr als 5 Gew.-%, bevorzugt nicht mehr als 1 Gew.-%.
Alternativ oder zusätzlich dazu kann auch die Matrix Gettermaterialien enthalten, sehr bevorzugt eines oder mehrere der vorgenannten Getter.

### Plasmainitiierung

Durch Einwirken eines Plasmas auf das Klebemittel in Anwesenheit der katalytisch aktiven Substanz wird die Polyreaktion der reaktiven Monomere initiiert, die zu einem Härten der Klebezusammensetzung führt und dadurch zu einer Herstellung des Klebeverbundes.
Als Plasma wird ein Gas bezeichnet, dessen Moleküle vollständig oder teilweise ionisiert vorliegen. Die Ionisierung erfolgt unter dem Einfluss elektrischer Felder und führt unter anderem auch zu einer Radikalbildung (insbesondere durch Fragmentierung von Gasmolekülen). Neben chemischen Spezies können auch unterschiedliche Strahlungskomponenten (z.B. VUV, UV, sichtbar, IR,...) entstehen.

Die Plasmaerzeugung kann erfindungsgemäß grundsätzlich mit allen gängigen Plasmaquellen erfolgen. Erfindungsgemäß bevorzugt werden Verfahren wie die dielektrische Barriereentladung (DBE), die Coronaentladung oder die Erzeugung ausgetriebener Plasmen eingesetzt. Auch die Anregung durch Mikrowellen ist in vielen Fällen einsetzbar.
Als ausgetriebenes Plasma sollen alle Systeme verstanden werden, bei denen das Plasma durch einen Gasstrom aus der Elektrodengeometrie, in der es erzeugt wird, herausgetrieben wird. Bekannt sind solche Verfahren unter anderem unter der Bezeichnung PlasmaJet®, Plasma-Pen®, Plasma-Blaster, Corona-Gun (als ausgetrieben Corona), um nur einige nicht einschränkend zu nennen.

Grundsätzlich können Niederdruckplasmen, Atmosphärendruckplasmen (Normaldruck-plasmen) und Hochdruckplasmen eingesetzt werden. Vorteilhaft wird bei einem Druck im Bereich zwischen 500 und 1200 hPa, besonders bevorzugt in Atmosphärendruck gearbeitet Bei Atmosphärendruckplasma entspricht der Druck im Wesentlichen dem der umgebenden Atmosphäre, ohne dass er apparativ erhöht oder erniedrigt werden würde, liegt also je nach Witterungsbedingungen üblicherweise etwa im Bereich 1013 ± 60 hPa (Meereshöhe; Normaldruck = 1013,25 hPa).

Bei Niederdruckplasmen sollte vorteilhaft darauf geachtet werden, dass es nicht zum Sieden der häufig flüssig vorliegenden Monomere kommt. Typische technische Niederdruckplasmen werden im Druckbereich weniger (bis einigen hundert) Pascal betrieben, also bei Drücken, die um einen Faktor 10.000 geringer sind als der normale Luftdruck.
Je nach Quelle und Bedingungen der Plasmaerzeugung wird ein Abstand von wenigen Zehntel Millimetern bis zu einigen Zentimetern zwischen der mit Plasma zu behandelnden Klebemittel-Zusammensetzung - genauer deren Oberfläche - und der Plasmaquelle gewählt.
Als Prozessgase für die Plasmabehandlung können die gängigen Prozessgase verwendet werden. Insbesondere vorteilhaft können sauerstoffhaltige Prozessgase eingesetzt werden, wie beispielweise (reiner) Sauerstoff, Luft, Wasserdampf oder Gemische aus zweien oder mehreren der vorgenannten Gase und/oder mit anderen Gasen, wie etwa Stickstoff, Edelgase (wie Argon) und dergleichen. Insbesondere vorteilhaft werden feuchte Gase (also Gasgemische enthaltend Wasserdampf) eingesetzt.

Die Plasmabehandlung sollte bevorzugt derart geführt werden, dass das Prozessgas sich nicht über 120 °C, bevorzugt nicht über 60 °C, erwärmt, um das Klebesystem und/oder die zu verklebenden Substrate zu schonen. Dies kann insbesondere dadurch erreicht werden, dass die Erzeugung des Plasmas derart durchgeführt wird, dass die Elektroden sich nicht über diese Temperaturen hinaus erhitzen.

Die Dauer der Plasmabehandlung zur effizienten Initiierung der Polyreaktion beträgt in der Regel wenige Sekunden, zum Beispiel bis zu 20 Sekunden. Eine Behandlungsdauer der Oberfläche mit Plasma für eine Dauer von bis zu 15 Sekunden, insbesondere von 3 bis 10 Sekunden, hat sich als sehr günstig herausgestellt, um eine optimale Festigkeit der Verklebung zu gewährleisten.

Es sind verschiedene Plasmaerzeuger auf dem Markt, die sich in der Technik zur Plasmaerzeugung und der Gasatmosphäre unterscheiden. Obwohl sich die Behandlungen unter anderem in der Effizienz unterscheiden, sind die grundsätzlichen Effekte meist ähnlich und sind vor allem durch die eingesetzte Gasatmosphäre bestimmt. Die Wahl der Plasmaerzeuger ist erfindungsgemäß grundsätzlich nicht eingeschränkt, sofern sich die vorgenannten Bedingungen realisieren lassen.

Grundsätzlich kann man der Atmosphäre auch reaktive gasförmige Stoffe wie Sauerstoff, Wasserstoff, Ammoniak, Ethylen, CO₂, Siloxane, Acrylsäuren und/oder Lösungsmittel sowie beschichtende oder polymerisierende Bestandteile beimischen.

Um möglichst gute Verklebungsfestigkeiten zu erhalten, wird die Polyreaktion zu im Wesentlichen vollständigen Umsätzen der reaktiven Monomere geführt. Über die Zeit und die Intensität der Plasmabehandlung und/oder die Menge des eingesetzten Katalysators eröffnet das erfindungsgemäße Verfahren aber auch die Möglichkeit, die schließliche Verklebungsfestigkeit zu variieren auf gewünschte Werte zu justieren.

### Klebeverfahren

Der Klebstoff kann auf unterschiedliche Weisen zur Anwendung kommen.

In einer ersten Ausführungsform wird der Klebstoff direkt als Flüssigkeit auf eines der zu verklebenden Substrate aufgetragen und durch Plasma aktiviert. Der Klebstoff kann ohne weitere Zusätze eingesetzt werden, also ausschließlich die reaktiven Monomere und die katalytisch aktiven Substanzen, enthalten, oder es können ihm die weiteren genannten Additive beigemischt sein. Insbesondere durch Anwesenheit eines oder mehrerer Verdickungsmittel im Klebstoff kann dessen Viskosität erhöht sein, damit der Klebstoff besser handhabbar ist. Nach Beendigung der Plasmaaktivierung wird das zweite Substrat aufgelegt und dem Klebstoff Gelegenheit zur Härtung gegeben, so dass die Verklebung der Substrate miteinander bewirkt wird.

In einer zweiten vorteilhaften Ausführungsform umfasst der Klebstoff so viel Verdickungsmittel, dass er als im Wesentlichen formerhaltende Schicht ausgebildet werden kann. Eine solche Schicht kann beispielweise der besseren Handhabbarkeit halber auf einem temporären Träger, der bevorzugt antiadäsiv ausgerüstet ist, angeboten werden. Diese Schicht wird zur Initiierung der Härtungsreaktion der Plasmaeinwirkung ausgesetzt.

In einer dritten günstigen Ausführungsform wird der Klebstoff wie vorstehend bereits näher ausgeführt in eine Matrix eingebettet, wobei die Matrix für eine hinreichende Formfestigkeit des resultierenden Klebmittels sorgt. Auch dieses Klebmittel wird zur Initiierung der Härtungsreaktion der Plasmaeinwirkung ausgesetzt. Dabei kann das Klebemittel grundsätzlich alle zwei- und dreidimensionalen Formen annehmen, da die einmal initiierte Härtungsreaktion sich auch durch größere dreidimensionale Gebilde hindurch fortsetzen kann.
In besonders bevorzugter Weise wird das Klebemittel umfassend die Matrix und den Klebstoff als filmförmige Klebeschicht eingesetzt.

Filmförmig ausgebildete Klebeschichten werden im Folgenden allgemein als Klebefilm bezeichnet.
Die erfindungsgemäßen Klebefilme sind insbesondere in Klebebändern einsetzbar. Dies gilt grundsätzlich für alle erfindungsgemäßen Klebefilme, insbesondere die vorstehend beschriebenen, insbesondere auch für die erfindungsmäßen Klebefilme, bei der der Klebstoff in einer filmförmigen Matrix vorliegt. Eine Vielzahl von Klebebändern ist erfindungsgemäß realisierbar, wie nachfolgend dargestellt. Für alle nachfolgend genannten Ausgestaltungen gilt, dass einzelne, mehrere oder alle offenliegenden Klebefilmoberflächen (die äußeren Oberflächen der außenliegenden Klebefilme) zu ihrem Schutz und der besseren Handhabbarkeit halber mit Abdeckmaterialien (Linern) versehen werden können.
- einschichtige Klebebänder, die nur aus dem erfindungsgemäßen Klebefilm bestehen;
- einseitig verklebbare Klebebänder, bei denen eine der außenliegenden Schichten durch einen erfindungsgemäßen Klebefilm gebildet wird und die andere außenliegende Schicht nicht klebfähig ausgestaltet ist, etwa in Form einer dauerhaften Trägerschicht,
   ∘ wobei das Klebeband ausschließlich aus den zwei vorgenannten Schichten aufgebaut sein kann, oder
   ∘ wobei zusätzlich zwischen den beiden vorgenannten Schichten weitere Schichten vorhanden sind, wie weitere Trägerschichten, Schaumschichten, Dämpfungsschichten, weitere Klebeschichten oder dergleichen, oder
- doppelseitig verklebbare Klebebänder, bei denen die beiden außenliegenden Schichten durch erfindungsgemäße Klebefilme gebildet werden,
   ∘ wobei das Klebeband ausschließlich aus den zwei vorgenannten Schichten aufgebaut sein kann, die sich jedoch unterscheiden (zum Beispiel durch die Wahl der Matrix und/oder durch die Wahl des Klebstoffs), oder
   ∘ wobei zusätzlich zwischen den beiden außenliegenden Schichten weitere Schichten vorhanden sind, wie weitere Trägerschichten, Schaumschichten, Dämpfungsschichten, weitere Klebeschichten oder dergleichen, und die beiden außenliegenden Klebefilme identisch sind, oder
   ∘ wobei zusätzlich zwischen den beiden außenliegenden Schichten weitere Schichten vorhanden sind, wie weitere Trägerschichten, Schaumschichten, Dämpfungsschichten, weitere Klebeschichten oder dergleichen, und die beiden außenliegende Klebefilme in der Zusammensetzung (zum Beispiel durch die Wahl der Matrix und/oder durch die Wahl des Klebstoffs) und/oder der Geometrie (zum Beispiel der Schichtdicke) unterschiedlich sind, oder
- doppelseitig verklebbare Klebefilme, bei denen eine der außenliegenden Schicht durch einen erfindungsgemäßen Klebefilm gebildet wird und die andere der außenliegenden Schichten durch einen nicht erfindungsgemäßen Klebefilm gebildet ist, etwa eine Haftklebemasse, eine Schmelzklebemasse, eine nicht erfindungsgemäße Reaktivklebemasse oder dergleichen,
   ∘ wobei das Klebeband ausschließlich aus den zwei vorgenannten Schichten aufgebaut sein kann, oder
   ∘ wobei zusätzlich zwischen den beiden außenliegenden Schichten weitere Schichten vorhanden sind, wie weitere Trägerschichten, Schaumschichten, Dämpfungsschichten, weitere Klebeschichten oder dergleichen, oder
- einseitig oder doppelseitig verklebbare mehrschichtige Klebebänder, bei denen zumindest eine der innenliegenden Klebefilme durch einen erfindungsgemäßen Klebefilm gebildet wird.

Erfindungsgemäß können die Klebebänder der Erfindung weitere Filme, Schichten, Klebstoffe sowie permanente und oder temporäre Träger umfassen. Geeignete Trägermaterialien sind einem Fachmann auf dem Gebiet bekannt. Beispielsweise können als permanente Träger Folien [Polyester, Polyethylenterephthalat (PET), Polyethylen (PE), Polypropylen (PP), Monoaxial orientiertes PP (MOPP), Biaxial orientiertes PP (BOPP), Polyvinylchlorid (PVC), Polyimide], Vliese, Schäume, Gewebe und/oder Gewebefolien verwendet werden. Temporäre Träger sollten mit einer Trennschicht versehen sein, wobei die Trennschicht in der Regel aus einem Silikontrennlack oder einem fluorierten Trennlack besteht oder polyolefinischen Charakter [Polyethylen hoher Dichte (HDPE), Polyethylen geringer Dichte (LDPE)] aufweist. Gegebenenfalls kann es wünschenswert sein, dass die Oberflächen der Träger durch ein physikalisches, chemisches und/oder physikalisch-chemisches Verfahren vorbehandelt werden. Hier ist beispielsweise das Aufbringen eines Primers oder einer Haftvermittlerzusammensetzung vorteilhaft.

Die Aktivierung der Polyreaktion durch Plasma wirkt insbesondere auf die Oberfläche ein, die dem Plasma ausgesetzt ist. Bei erfindungsgemäßen Klebefilmen, insbesondere mit einem hohen Anteil an katalytisch aktiven Substanzen und/oder bei hohen Konzentrationen an reaktiven Komponenten im Plasma, kann es daher zu einer schnellen Reaktion direkt an der Oberfläche kommen, aber zu einer langsameren Reaktion im Filminneren. Die ausgehärtete Schicht ihrerseits kann gegebenenfalls eine Art "Sperrwirkung" gegenüber dem Plasma ausbilden. Dies kann dazu führen, dass entweder das Schichtinnere nicht vollständig oder langsam härtet, oder aber dass die Verarbeitungszeit der aktivierten Oberfläche klein wird, so dass es zu Problemen beim hinreichend schnellen Aufbringen des auf ihr zu verklebenden Substrats kommen kann.
Daher kann es günstig sein, wie im letzten vorstehend beschriebenen Ausführungsbeispiel für Klebebänder beschrieben, die aktivierbare erfindungsgemäße Klebeschicht als eine innere Schicht des Klebebandes auszugestalten, etwa als zweitäußere Schicht, und auf diese erfindungsgemäße Klebeschicht beispielweise eine nicht erfindungsgemäße Klebeschicht anzuordnen, die dem direkten Plasmaeinfluss ausgesetzt wird. Die äußere Klebeschicht kann beispielweise eine solche sein, bei der Monomere ähnlich der Erfindung in einer Matrix vorgelegt werden, die aber keine katalytisch aktive Substanz enthält. Durch den Einfluss des Plasmas kommt es hier zu keiner oder nur zu einer geringeren Aktivierung einer Polyreaktion, und die Reaktion in dem erfindungsgemäßen Klebefilm springt erst an, wenn Radikale - entweder aus dem Plasma oder in der äußeren Schicht in begrenztem Umfang erzeugte - durch die äußere Schicht hindurch bis zum erfindungsgemäßen Klebefilm vorgedrungen sind. Der äußere Klebefilm kann beispielweise auch ein solcher sein, der zwar erfindungsgemäß ist und sowohl Monomere als auch zumindest eine katalytisch aktive Substanz enthält, bei der aber der Gehalt der katalytisch aktiven Substanz deutlich verringert ist, beispielsweise um ein Vielfaches im Vergleich zum nachfolgenden erfindungsgemäßen Klebefilm (zweitäußere oder noch spätere Schicht).
Durch die vorgenannte Anordnung gelingt es, die Reaktionsgeschwindigkeit innerhalb des äußeren Klebefilms gegenüber einem innenliegenden erfindungsgemäßen Klebefilm deutlich herabzusetzen.

Die Behandlung der offenliegenden Oberfläche eines zu verklebenden Klebefilms erfolgt für alle erfindungsgemäßen Varianten im Prinzip gleich, nämlich vor der Aufbringung des zu verklebenden Substrats auf diese Oberfläche. Falls vorhanden, wird zunächst der Liner abgezogen, dann die Klebefilmoberfläche mit Plasma behandelt und innerhalb der Verarbeitungszeit, bevorzugt unmittelbar nach der Beendigung der Plasmabehandlung der Kontakt zwischen dem aktivierten Klebefilm und der Substratoberfläche hergestellt.

Bei der Verklebung doppelseitig verklebbarer Klebebänder sind unterschiedliche Verfahrensabläufe durchführbar:
So können zunächst beide Klebebandoberflächen von eventuellen Abdeckmaterialien befreit werden und beide Oberflächen gleichzeitig mit Plasma behandelt werden. Die Plasmabehandlung kann dabei auch in einer einzigen Apparatur unmittelbar nach dem Entfernen der Abdeckmaterialien erfolgen. Dann werden die beiden aktivierten Klebebandoberflächen gleichzeitig oder nacheinander innerhalb der Verarbeitungszeit mit den jeweiligen auf ihnen zu verklebenden Substratoberflächen in Kontakt gebracht. Zur Erhöhung der Verklebungsfestigkeit kann Druck auf die Verklebungsflächen ausgeübt werden. Nach Aushärtung der Klebefilme ist der final vorliegende Verbund hergestellt.

In einer weiteren Vorgehensweise werden die beiden Klebebandoberflächen unabhängig voneinander von eventuellen Abdeckmaterialien befreit, unabhängig voneinander mit Plasma behandelt und unabhängig voneinander mit den jeweiligen Substartoberflächen in Kontakt gebracht. So kann beispielweise der Liner der ersten Klebebandoberfläche entfernt werden, die erste Klebebandoberfläche plasmaaktiviert werden, dann in Kontakt zur ersten Substratoberfläche gebracht werden, und nachfolgend wird die zweite Klebebandoberfläche freigelegt, plasmabehandelt und anschließend mit dem zweiten Substrat verklebt.

In einer dritten Vorgehensweise, die beispielsweise - aber nicht ausschließlich - für einschichtige Klebefilme von Interesse sein kann, wird nur eine der Klebebandoberflächen eines doppelseitig verklebbaren Klebebandes aktiviert. Der mit den beiden Substratoberflächen kontaktierte Klebefilm kann dann beginnend von einer Seite hin zur anderen Seite härten und so den Klebeverbund bewirken. Die Reihenfolge des Inkontaktbringens der Oberflächen mit der plasmaaktivierten Klebebandoberfläche und der nicht behandelten Oberfläche kann dabei den jeweiligen Gegebenheiten angepasst sein.

Es hat sich gezeigt, dass die übliche Verarbeitungszeit der Klebesysteme - insbesondere der Klebefilme - nach deren Aktivierung bis zu einige Minuten oder sogar einigen zig Minuten beträgt. Innerhalb dieser Zeit lassen sich die aktivierten Klebesysteme mit den zu verklebenden Substraten in Kontakt bringen und die Fügung wie gewünscht anordnen und positionieren. Die Zeit zum Aushärten der Verklebung beträgt üblicherweise einige Stunden.

Zur Vorfixierung bei der Positionierung und/oder um den Verbund im Zeitraum nach der Plasmaaktivierung und Fügung bis zur vollständigen Ausbildung zu stabilisieren, kann es vorteilhaft sein, wenn die Klebesysteme - insbesondere Klebefilme - haftklebrig ausgestaltet sind, etwa durch Verwendung einer Filmbildner-Matrix, die eine Eigenklebrigkeit aufweist, oder selbstklebriger oder den verdickten Klebstoff selbstklebrig machender Verdickungsmittel.
Alternativ oder zusätzlich kann es vorteilhaft sein, den Verbund durch entsprechende mechanische Maßnahmen (Halterungsvorrichtungen, Einspannvorrichtungen oder dergleichen) zu stabilisieren, bis die Härtung soweit fortgeschritten ist, dass die Klebkräfte zum Zusammenhalt des Verbundes hinreichend sind.

### Substrate

Geeignete Substrate, die zur Verklebung über das erfindungsgemäße, reaktive Klebstofffilm-System geeignet sind, sind Metalle, Glas, Holz, Beton, Stein, Keramik, Textil und/oder Kunststoffe. Die zu verklebenden Substrate können gleich oder verschieden sein.

In einer bevorzugten Ausführungsform wird das erfindungsgemäße, reaktive Klebstofffilm-System zur Verklebung von Metallen, Glas und Kunststoffen eingesetzt. In einer besonders bevorzugten, erfindungsgemäßen Ausführungsform werden Polycarbonate und eloxiertes Aluminium verklebt.

Die zu verklebenden Metallsubstrate können generell aus allen geläufigen Metallen und Metalllegierungen gefertigt werden. Bevorzugt kommen Metalle, wie zum Beispiel Aluminium, Edelstahl, Stahl, Magnesium, Zink, Nickel, Messing, Kupfer, Titan, eisenhaltige Metalle und Legierungen zum Einsatz. Die zu verklebenden Teile können außerdem aus unterschiedlichen Metallen aufgebaut sein.

Geeignete Kunststoffsubstrate sind beispielsweise Acrylnitril-Butadien-StyrolCopolymere (ABS), Polycarbonate (PC), ABS/PC-Blends, PMMA, Polyamide, Glasfaserverstärkte Polyamide, Polyvinylchlorid, Polyvinylenfluorid, Cellulose Acetat, Cycloolefin-Copolymere, Flüssigkristallpolymere (LCP), Polylactid, Polyetherketone, Polyetherimid, Polyethersulfon, Polymethacrylmethylimid, Polymethylpenten, Polyphenylether, Polyphenylensulfid, Polyphthalamid, Polyurethane, Polyvinylacetat, Styrol Acrylnitril Copolymere, Polyacrylate bzw. Polymethacrylate, Polyoxymethylen, Acrylester-Styrol-Acrylnitril Copolymere, Polyethylen, Polystyrol, Polypropylen und/oder Polyester, wie z.B. Polybutylenterephthalate (PBT) und/oder Polyethylenterephthalat (PET).

Substrate können lackiert, bedruckt, bedampft oder besputtert sein.

Die zu verklebenden Substrate können jede beliebige Form annehmen, die für die Verwendung des resultierenden Verbundkörpers erforderlich ist. In der einfachsten Form sind die Substrate eben. Außerdem können auch dreidimensionale Substrate, die z.B. geneigt sind, mit dem erfindungsgemäßen Klebemittel verklebt werden. Die zu verklebenden Substrate können auch die verschiedensten Funktionen einnehmen, wie zum Beispiel Gehäuse, Sichtfenster, Versteifungselemente, etc.

Gegebenenfalls kann es wünschenswert sein, dass die Oberflächen zu verklebenden Substrate durch ein physikalisches, chemisches und/oder physikalisch-chemisches Verfahren vorbehandelt werden. Hier ist beispielsweise eine Plasmavorbehandlung und/oder das Aufbringen eines Primers und/oder einer Haftvermittlerzusammensetzung vorteilhaft.

Aufgrund der schonenden Verfahrensführung insbesondere bei geringen Temperaturen lässt sich das erfindungsgemäße Verfahren insbesondere auch für solche Anwendungen vorteilhaft einsetzen, bei denen es um die Verklebung sehr empfindlicher Substrate geht.

Das erfindungsgemäße Verklebungsverfahren ist grundsätzlich für alle technischen Gebiete anwendbar. Eine besondere Eignung ergibt sich beispielweise für elektronische Geräte, wie beispielsweise bei der Display-Verklebung, sowie für den Automobilbereich. Auch für temperatursensitive Verklebungsuntergründe mit hohen mechanischen Beanspruchungen und/oder bei schmalen Stegbreiten ist das erfindungsgemäße Verfahren sehr geeignet.

Sowohl die mit dem erfindungsgemäßen Klebeverfahren hergestellten Klebeverbunde als auch die erfindungsgemäßen Klebstoffe selbst, etwa insbesondere in Form als Klebefilm oder Klebeband (siehe hierzu insbesondere das nachfolgende Kapitel "Verfahren zur Herstellung von Klebefilmen"), zeichnen sich durch eine sehr gute Beständigkeit aus. So sind die erfindungsgemäßen Klebeverfahren und der Einsatz der erfindungsgemäßen Klebemassen unter anderem dort auch besonders geeignet, wo die Bauteile, die eine entsprechende Klebung aufweisen oder deren Herstellung eine entsprechende erfindungsgemäße Verklebung beinhaltet, weiteren Verfahrensschritten unterzogen werden, bei denen diese Teile weiteren Belastungen ausgesetzt sind, etwa mechanischer, chemischer und/oder sonstiger Art. Aber auch dort, wo die bestimmungsgemäße Verwendung der Bauteile zu hohen Belastungen führt, sind die erfindungsgemäße Verklebungen aufweisenden Komponenten hervorragend geeignet.

Im Automobilbereich etwa werden Komponenten - wie beispielweise die Karosserie - häufig weiteren Verfahrensschritten unterzogen, beispielweise Lackierungsprozessen. Die elektrophoretische Lackierung (Elektrotauchlackierung) stellt ein Tauchverfahren dar, bei dem die Beschichtung durch Einwirkung eines elektrischen Feldes (50 bis 400 V) erfolgt. Der zu lackierende, den elektrischen Strom leitende Körper wird als Anode oder Kathode in das Farbbad eingebracht, in der Praxis fungiert die Beckenwand als zweite Elektrode. Die abgeschiedene Lackmenge ist der zugeführten Strommenge direkt proportional. Die elektrophoretische Lackierung wird besonders zur Grundierung von Automobilkarosserien eingesetzt. Es treten keine Spritzverluste auf, und die erhaltenen Beschichtungen sind auch an schwer zugänglichen Stellen sehr gleichmäßig. Bei nichtleitenden Unterlagen, zum Beispiel Kunststoffen, Glas, Keramik usw. bedient man sich zur Beschichtung der elektrostatischen Aufladung der Lackteilchen (so genannte elektrostatische Lackierung).
In der Automobilindustrie wird die kathodische Tauchlackierung (KTL) bevorzugt. Das KTL-Bad besteht zu etwa 80 % aus Wasser, 19 % sind Bindemittel und Pigmente, nur etwa 1 bis 2% sind organische Lösungsmittel. Der pH-Wert ist leicht sauer und liegt bei etwa 6 bis 6,5. Der Abscheidemechanismus gliedert sich in mehrere Stufen: Das wasserunlösliche Kunstharz wird erst in Verbindung mit einer organischen Säure in Wasser dispergierbar. Im Bereich des negativ geladen Werkstücks (Kathode) kommt es aufgrund der Wasserstoffentwicklung zu einer alkalischen Grenzschichtbildung (pH 11 bis 13). Durch die erhöhte OH- Konzentration an der Werkstückoberfläche koaguliert der im Wasser gelöste Lack und scheidet sich in Form einer feinen Lackschicht auf dem Bauteil ab. Um eine Sedimentation zu verhindern sowie die Bildung von Toträumen auszuschließen, wird das Bad im Tank mit einer mittleren Strömungsgeschwindigkeit von etwa 0,2 m/s bewegt, bezogen auf den Tankinhalt wird das Bad 4 bis 6 mal pro Stunde umgewälzt. Bei einem Lackverbrauch von 2 bis 3 kg/Karosserie sowie einer nicht zu vernachlässigenden Wasserverdunstung bei Badtemperaturen um 30 °C ist eine ständige Regelung der Badzusammensetzung erforderlich. Die an der Anode frei werdenden organischen Säuren werden durch ein Dialysesystem abgetrennt und somit der pH-Wert des Bades stabil gehalten. Anschließend folgt eine mehrstufige Spülzone mit Ultrafiltrat aus der Lackrückgewinnung oder vollentsalztem Wasser.
Der Lack wird bei etwa 180 °C eingebrannt, die Schichtdicke beträgt 20 bis 30 µm. Je nach Verfahrensvariante wird noch eine zusätzliche zweite Lackschicht als Füllschicht aufgetragen. Erst jetzt erfolgt die eigentliche Lackierung mit dem farbgebenden Decklack, sowie dem Klarlack.
Der erfindungsgemäße Klebstoff (beispielweise in Form eines Klebefilms) als auch die mittels des erfindungsgemäßen Verfahrens erzeugten Verklebungen halten einem Lackierprozess, beispielsweise einem KTL-Prozess, stand und beeinträchtigen den Lackierprozess oder die darin eingesetzten Medien nicht nennenswert. Insbesondere wird die Nutzungsdauer eines KLT-Bads nicht wesentlich vermindert.

Zwar wird üblicherweise die Karosserie eines Kraftfahrzeugs von anhaftenden Verunreinigungen wie Fetten, Ölen und Schmutzpartikeln in einer mehrstufigen Entfettungs- und Spülzone gesäubert, es ist aber nicht auszuschließen, dass Reste von Öl auf den Blechen verbleiben. Des Weiteren ist es zum Beispiel im Karosserierohbau üblich, dass die verölten Bleche bereits vor der Reinigung mit Klebstoffen beziehungsweise Klebebändern ausgerüstet werden.
Der erfindungsgemäße Klebstoff baut auch zu verölten Untergründen eine ausreichende Adhäsion auf.

Der erfindungsgemäße Klebstoff benetzt den Untergründen so gut, dass kein Wasser in die Verklebungsfläche eindringen kann, was eine spätere Korrosion aufgrund des eingedrungenen Wassers verhindert. Insbesondere wenn der erfindungsgemäße Klebstoff - beispielsweise als Klebeband - aufschäumbar ausgerüstet ist, zum Beispiel durch den Zusatz von expandierbaren Mikrohohlkugeln oder einem chemischen Schäumungsmittel, können Hohlräume ausgefüllt und Kavitäten gegen eindringendes Wasser abgedichtet werden.

Der erfindungsgemäße Klebstoff zeigt bei der Aushärtung beziehungsweise Vernetzung auch keine derartige Schrumpfung, dass beispielsweise Risse in einer beschichteten, zum Beispiel lackierten, Substratoberfläche auftreten oder gar Lackstücke aus der geschlossen lackierten Fläche, die vom erfindungsgemäßen Kleber/vom erfindungsgemäßen Klebeband abgedeckt wird, gerissen werden.

Schließlich stellt der erfindungsgemäße Klebstoff eine galvanische Trennung der miteinander verklebten Substrate sicher.

### Verfahren zur Herstellung von Klebefilmen

Sofern die erfindungsgemäßen Klebstoffe als Klebefilme, zum Beispiel in Klebebändern, zum Einsatz kommen, werden die Klebefilme bevorzugt durch das nachfolgend beschriebene Verfahren hergestellt:
In einem ersten Schritt werden die Inhaltsstoffe in einem oder mehreren Lösemittel(n) und/oder Wasser gelöst bzw. fein verteilt. Alternativ ist kein Lösemittel und/oder Wasser notwendig, da die Inhaltsstoffe bereits vollständig ineinander löslich sind (ggf. unter Einwirkung von Wärme und/oder Scherung). Geeignete Lösemittel sind im Stand der Technik bekannt, wobei bevorzugt Lösemittel eingesetzt werden, in denen mindestens einer der Inhaltsstoffe eine gute Löslichkeit aufweist. Besonders bevorzugt ist Aceton.

Wie hierin verwendet, umfasst der Begriff Inhaltsstoff die - insbesondere polymere - Filmbildner-Matrix, mindestens ein reaktives Monomer (also zumindest eine in radikalischen Polyreaktionen reaktive Substanz), zumindest ein Metallchelat aus der Gruppe der Metallphthalocyanine und/oder aus der Gruppe der Metallporphyrine, sowie gegebenenfalls weitere Additive und/oder Hilfsstoffe, wie oben definiert.

Anschließend werden die aufgelösten oder fein verteilten Inhaltsstoffe in einem zweiten Schritt vermischt. Zur Herstellung der Mischung werden übliche Rührgeräte eingesetzt. Gegebenenfalls wird die Lösung zudem erwärmt. Ggf. werden die Inhaltsstoffe gleichzeitig aufgelöst bzw. feinverteilt und vermischt.

Daraufhin wird in einem dritten Schritt ein Trennpapier oder Trennfolie, ein Trägermaterial oder ein Haftklebstoff mit der Mischung der aufgelösten bzw. fein verteilten Inhaltsstoffe nach Schritt 2 beschichtet. Die Beschichtung erfolgt nach den üblichen Techniken, die im Stand der Technik bekannt sind.

Nach der Beschichtung wird das Lösemittel in einem vierten Schritt durch Abdampfen entfernt und so ein Klebefilm erhalten.

Gegebenenfalls kann der Klebefilm in einem weiteren Schritt zu einer Rolle aufgewickelt und/oder konfektioniert werden.

Zur Lagerung werden die erfindungsgemäßen, reaktiven Klebefilme vorteilhaft mit einem Trennliner oder -papier abgedeckt.

Alternativ werden die erfindungsgemäßen Klebefilme lösungsmittelfrei durch Extrusion, Hotmeltdüsenbeschichtung oder Kalandrieren hergestellt.

### Experimenteller Teil

### Beispiele

In einer ersten Herstellweise wird zunächst eine 20%ige acetonische Lösung der Filmbildner-Matrix (PU-Lösung) hergestellt. Dazu werden 120 g Desmomelt 530® (vgl. Angaben oben) und 480 g Aceton in ein Schraubglas eingewogen und das Schraubglas wird anschließend verschlossen. Durch mehrtägiges Rollen des Schraubglases auf einer Rollbank wird das Desmomelt 530® vollständig in Lösung gebracht. Je nach Rollgeschwindigkeit dauert der Vorgang etwa ein bis sieben Tage. Alternativ kann die acetonische Lösung auch durch Rühren des Desmomelt 530®-Granulats in Aceton mit einem handelsüblichen Laborrührer hergestellt werden.
Im weiteren werden in Mengenverhältnissen gemäß der nachfolgenden Aufstellung (Tabelle 1) die so hergestellte 20%ige acetonische Lösung von Desmomelt 530®, 2-Phenoxyethylmethacrylat, Ethylenglykoldimethacrylat, Eisen(II)phthalocyanin und gegebenenfalls Purmol® 3STH -Getter (Zeolith (Molekularsieb); Porengröße 0,3 nm (3 Å), Partikelgröße < 30 µm, Wasseraufnahmevermögen 23 %; Firma Zeochem) mit einem handelsüblichen Laborrührer 10 Minuten gemischt.

In einer weiteren Herstellweise wird eine 30%ige Lösung von Saran F-310® [nichtkristallines, thermoplastisches Vinylidenchlorid-Acrylnitril-Copolymerisat Poly(vinylidenchlorid-Co-Acrylonitril); CAS-Nr. 9010-76-8] in Aceton mit 2-Phenoxyethylmethacrylat, Ethylenglykoldimethacrylat, Eisen(II)phthalocyanin und Purmol 3STH-Getter mit einem handelsüblichen Laborrührer 10 Minuten gemischt (Mengenverhältnisse siehe Beispiel 5 in Tabelle 1).

**Tabelle 1**

| Alle Angaben in Gew.-%; für PU und F310 Angabe des Feststoffgehaltes (ohne Aceton) | | | | | | |
|---|---|---|---|---|---|---|
| | PU | F310 | PEM | EGDM | EPC | 3STH |
| Beispiel 1 | 68,1 | | 30 | 1,4 | 0,5 | |
| Beispiel 2 | 68,1 | | 25,5 | 1,4 | 0,5 | 4,5 |
| Beispiel 3 | 68,5 | | 25,6 | 1,4 | | 3 |
| Beispiel 4 | 65,5 | | 24,5 | 1,35 | 0,65 | 8,6 |
| Beispiel 5 | | 71,2 | 22,2 | 1,2 | 0,2 | 5,2 |
| Beispiel 6 | 68,1 | | 30 | 1,4 | 0,33 | |

| | | | | | | |
|---|---|---|---|---|---|---|
| PU: Desmomelt 530®, Einsatz als 20%ige Lösung in Aceton F310: Saran F-310®, Einsatz als 30%ige Lösung von in Aceton PEM: 2-Phenoxyethylmethacrylat EGDM: Ethylenglycoldimethacrylat EPC: Eisen(II)phthalocyanin 3STH: Purmol 3STH® Getter | | | | | | |

Die jeweils erhaltene homogene Mischung wird mit Hilfe eines handelsüblichen Laborstreichtisches (zum Beispiel von der Firma SMO (Sondermaschinen Oschersleben GmbH)) mit einem Streichmesser auf einer silikonisierten Polyesterterephthalatfolie ausgestrichen. Anschließend wird das Aceton bei 60°C bis 80°C im Trockenschrank 10 Minuten abgedampft. Die Spaltbreite beim Ausstreichen wird so eingestellt, dass nach dem Abdampfen des Lösemittels ein 150 µm dicker Film erhalten wird. Der erhaltene haftklebrige Film wird bis zur Verklebung mit einer silikonisierten Polyesterfolie abgedeckt.

Vor der Plasmabehandlung wurden die zwischen den silikonisierten Polyesterfolien befindlichen Klebefilme jeweils in 13 mm * 20 mm große rechteckige Muster zugeschnitten.
Die Plasmabehandlung erfolgte mit einer dielektrisch behinderten Oberflächenentladung geometrisch vergleichbar mit Oehmigen et al., Plasma Processes and Polymers 7, 2010*.* Das Dielektrikum war aus Al₂O₃ gefertigt. Die Elektrodenstruktur war auf der dem Substrat zugewandten Seite mit einer Schutzschicht aus Glas abgedeckt. Angeregt wurde das Plasma mit einer sinusförmigen Hochspannung von 9,2 kV bei einer Frequenz von 15,9 KHz. Die Behandlungszeiten variierten zwischen 1 s und 10 s.

In einer ersten Versuchsreihe wurden Klebefilm-Muster der Beispiele 1 bis 5 einseitig mit Plasma behandelt. Für eine einseitige Initiierung wurde zunächst auf einer Seite der Muster der Liner entfernt und die Klebmasse vollflächig auf einer Schertestplatte aus Stahl (rostfreier Stahl 302 nach ASTM A 666; 50 mm x 125 mm x 1,1 mm, glänzende geglühte Oberfläche, Oberflächenrauigkeit 50 ± 25 nm arithmetische Durchschnittsabweichung von der Basislinie) verklebt. Die nun offene Klebmasseseite wurde in einem Abstand von ca. 0,3 mm zur Elektrode im Plasma behandelt. Anschließend, innerhalb von 2 min, wurde eine zweite Schertestplatte aus Stahl (Spezifizierung wie bei erster Stahlplatte) auf die zweite Klebefilmseite gefügt und von Hand kurz angedrückt.

### Ergebnisse:

**Tabelle 2**

| | Behandlungsmethode | Resultat |
|---|---|---|
| Beispiel 1 | Plasma | Klebefilm wird fest |
| Beispiel 1 | UV | Keine Polymerisation/Vernetzung, Klebefilm behält ursprünglichen Zustand bei |
| Beispiel 2 | Plasma | Klebefilm wird fest, schneller als bei Beispiel 1 mit Plasmabehandlung |
| Beispiel 3 | Plasma | Keine Polymerisation/Vernetzung, Klebefilm behält ursprünglichen Zustand bei |
| Beispiel 4 | Plasma | Klebefilm wird fest |
| Beispiel 5 | Plasma | Klebefilm wird fest |

Die Härtungsdauer beträgt in der Regel weniger als 16 Stunden, jedoch wird schon nach wenigen Stunden eine Teilfestigkeit erreicht.

Die mit der Klebmasse nach Beispiel 6 in Tabelle 1 und den vorstehenden Vorschriften hergestellten Musterwurden beidseitig mit Plasma behandelt und nach der Aushärtung hinsichtlich ihrer Scherfestigkeit vermessen.
Hierzu wurde zunächst auf einer Seite der Muster der Liner entfernt und die nun offenliegende Klebefilm-Oberseite in einem Abstand von ca. 0,3 mm zur Elektrode im Plasma gemäß den oben genannten Plasma-Behandlungsbedingungen behandelt. Anschließend, innerhalb von 2 min, wurde eine erste Schertestplatte aus Stahl (rostfreier Stahl 302 nach ASTM A 666; 50 mm x 125 mm x 1,1 mm, glänzende geglühte Oberfläche, Oberflächenrauigkeit 50 ± 25 nm arithmetische Durchschnittsabweichung von der Basislinie) auf die behandelte Seite des Klebefilms gefügt, so dass die Klebefilmfläche vollständig bedeckt war, von Hand kurz angedrückt und danach der zweite Liner entfernt. Die nun offene noch unbehandelte Klebefilmseite wurde nachfolgend unter gleichen Bedingungen im Plasma behandelt und eine zweite Schertestplatte aus Stahl (Spezifizierung wie bei erster Stahlplatte) auf die behandelte zweite Seite des Klebefilms gefügt, so dass auch diese Seite vollständig bedeckt war, und ebenfalls von Hand kurz angedrückt. So entstand ein Verbund aus den zwei mittels des Klebefilms parallel verlebten Stahlplatten. Die Verklebungsfläche zwischen den Stahlplatten betrug somit 260 mm² (Dimensionen des Klebefilmmusters 13 mm * 20 mm, siehe oben). Die Verklebung der Stahlplatten erfolgte leicht versetzt positioniert, so dass auf zwei gegenüberliegenden Seiten des Verbundes jeweils eine Stahlplatte etwas herausragte. Dem Verklebungsverbund wurde dann 16 Stunden Zeit zur Aushärtung gegeben.
Zur Messung der Scherfestigkeit wurde der Verbund in eine Zugprüfmaschine eingespannt, indem die herausragende Kante der einen der Stahlplatten in eine Befestigung der Zugprüfmaschine und die gegenüberliegende herausragende Kante der zweiten Stahlplatte in eine zweite Befestigung der Zugprüfmaschine eingespannt wurde. Die beiden Stahlplatten konnten mit der Zugprüfmaschine parallel zueinander auseinandergezogen werden, wobei die Verklebung einer Scherung ausgesetzt wurde. Die Maximalkraft unmittelbar vor Versagen des Verklebungsverbundes (Lösen der Stahlplatten voneinder) wurde ermittelt und wird in Tabelle 2 jeweils bezogen auf die Verklebungsfläche angegeben.

**Tabelle 3: Messwerte für verschiedene Plasmabehandlungen anhand von Beispiel 6**

| Behandlungsseite | Behandlungsdauer je Seite | Scherfestigkeit |
|---|---|---|
| | [s] | [MPa] |
| Einseitig | 1 | 0,38 ± 0,14 |
| Beidseitig | 1 | 1,92 ± 0,45 |
| Beidseitig | 2 | 2,96 ± 0,30 |
| Beidseitig | 5 | 3,68 ± 0,03 |
| Beidseitig | 10 | 3,71 ± 0,04 |

## Patentansprüche

1. Verfahren zur Herstellung einer Verklebung mittels eines Klebstoffs, wobei als Klebstoff eine Zusammensetzung enthaltend zumindest eine in einer radikalischen Polyreaktion reaktive Substanz und eine katalytisch aktive Substanz eingesetzt wird, **dadurch gekennzeichnet, dass**
als katalytisch aktive Substanz zumindest ein Metallkomplex aus der Gruppe der Metallphthalocyanine und/oder aus der Gruppe der Metallporphyrine gewählt wird, wobei eine Polyreaktion der reaktiven Substanz erfolgt, die durch Einwirken eines Plasmas initiiert wird.

2. Verfahren nach Anspruch 1, **dadurch gekennzeichnet, dass**
zur Verklebung ein Klebemittel eingesetzt wird, bei dem der Klebstoff in einer polymeren Filmbildner-Matrix vorliegt.

3. Verfahren nach Anspruch 2, **dadurch gekennzeichnet, dass**
die polymere Filmbildner-Matrix ein thermoplastisches Polymer, vorzugsweise ein thermoplastisches Polyurethan, oder ein Elastomer oder ein thermoplastisches Elastomer ist.

4. Verfahren nach einem der vorangehenden Ansprüche, **dadurch gekennzeichnet,**
**dass**
dem Klebstoff Verdickungsmittel zugesetzt sind.

5. Verfahren nach einem der vorangehenden Ansprüche, **dadurch gekennzeichnet,**
**dass**
dem Klebstoff bzw. dem Klebemittel eines oder mehrere Gettermaterialien, insbesondere Zeolithe, zugesetzt sind.

6. Verfahren nach einem der vorangehenden Ansprüche, **dadurch gekennzeichnet,**
**dass**
der Klebstoff bzw. das Klebemittel filmförmig eingesetzt wird.

7. Verfahren nach einem der vorangehenden Ansprüche, **dadurch gekennzeichnet,**
**dass**
der Klebstoff bzw. das Klebmittel haftklebrige Eigenschaften besitzt.

8. Verfahren nach einem der vorangehenden Ansprüche, **dadurch gekennzeichnet,**
**dass**
weder der Klebstoff noch das Klebmittel haftklebrige Eigenschaften besitzen.

9. Verfahren nach einem der vorangehenden Ansprüche, **dadurch gekennzeichnet,**
**dass**
die Metalle des Metallkomplexes beziehungsweise der Metallkomplexe gewählt werden aus der Gruppe gebildet aus Eisen, Cobalt, Kupfer, Nickel, Aluminium, Magnesium, Mangan, Zinn, Zink.

10. Verfahren nach Anspruch 9, **dadurch gekennzeichnet, dass**
als Metall Eisen gewählt ist.

11. Verfahren nach einem der vorangehenden Ansprüche, **dadurch gekennzeichnet,**
**dass**
als katalytisch aktive Substanz Eisen(II)phtalocyanin gewählt wird.

12. Verfahren nach einem der vorangehenden Ansprüche, **dadurch gekennzeichnet,**
**dass**
als katalytisch wirksame Substanz ein oder mehrere Cobaltporphyrine gewählt werden.

13. Verfahren nach einem der vorangehenden Ansprüche, **gekennzeichnet durch**
eine stehende oder strömende Prozessgasatmosphäre.

14. Verfahren nach einem der vorangehenden Ansprüche, **dadurch gekennzeichnet,**
**dass**
das Plasma unter Atmosphärendruck erzeugt wird.

15. Verfahren nach einem der vorangehenden Ansprüche, **dadurch gekennzeichnet,**
**dass**
Luft oder Wasserdampf als Prozessgas verwendet wird.

16. Verfahren nach Anspruch 15, **dadurch gekennzeichnet, dass**
die Luft Feuchtigkeit enthält.

17. Verfahren nach zumindest einem der vorherigen Ansprüche **dadurch gekennzeichnet, dass** im Plasma reaktive gasförmige Stoffe wie Sauerstoff, Wasserstoff, Ammoniak, Ethylen, CO₂, Siloxane, Acrylsäuren und/oder Lösungsmittel sowie beschichtende oder polymerisierbare Bestandteile enthalten sind oder dem Plasma zugesetzt werden.

18. Verfahren nach einem der vorstehenden Ansprüche, **dadurch gekennzeichnet,**
**dass**
der Klebstoff oder das Klebemittel nach der Plasmaaktivierung geschäumt wird.

## Claims

1. Method for producing an adhesive bond by means of an adhesive, the adhesive used comprising a composition comprising at least one substance which is reactive in a radical polymerization reaction and one catalytically active substance, **characterized in that**
said catalytically active substance selected is at least one metal complex from the group of the metal phthalocyanines and/or from the group of the metal porphyrins, the reactive substance undergoing a polymerization reaction which is initiated by exposure to a plasma.

2. Method according to Claim 1, **characterized in that** for the adhesive bond an adhesive agent is used wherein the adhesive is present in a polymeric film-former matrix.

3. Method according to Claim 2, **characterized in that** the polymeric film-former matrix is a thermoplastic polymer, preferably a thermoplastic polyurethane, or an elastomer or a thermoplastic elastomer.

4. Method according to any of the preceding claims,
**characterized in that**
thickeners have been added to the adhesive.

5. Method according to any of the preceding claims,
**characterized in that**
one or more getter materials, more particularly zeolites, have been added to the adhesive and/or to the adhesive agent.

6. Method according to any of the preceding claims,
**characterized in that**
the adhesive and/or the adhesive agent are/is used in film form.

7. Method according to any of the preceding claims,
**characterized in that**
the adhesive and/or the adhesive agent possess/possesses pressure-sensitive adhesive properties.

8. Method according to any of the preceding claims,
**characterized in that**
neither the adhesive nor the adhesive agent possess pressure-sensitive adhesive properties.

9. Method according to any of the preceding claims,
**characterized in that**
the metals of the metal complex or of the metal complexes are selected from the group consisting of iron, cobalt, copper, nickel, aluminum, magnesium, manganese, tin, zinc.

10. Method according to Claim 9, **characterized in that** said metal selected is iron.

11. Method according to any of the preceding claims,
**characterized in that**
said catalytically active substance selected is iron(II) phthalocyanine.

12. Method according to any of the preceding claims,
**characterized in that**
said catalytically active substance selected comprises one or more cobalt porphyrins.

13. Method according to any of the preceding claims,
**characterized by** a stationary or flowing process gas atmosphere.

14. Method according to any of the preceding claims,
**characterized in that**
the plasma is generated under atmospheric pressure.

15. Method according to any of the preceding claims,
**characterized in that**
air or water vapor is used as process gas.

16. Method according to Claim 15, **characterized in that**
the air contains moisture.

17. Method according to at least one of the preceding claims, **characterized in that** the plasma comprises or is admixed with reactive gaseous substances such as oxygen, hydrogen, ammonia, ethylene, CO₂, siloxanes, acrylic acids and/or solvents and also coating or polymerizable constituents.

18. Method according to any of the preceding claims,
**characterized in that**
the adhesive or the adhesive agent is foamed after the plasma activation.

## Revendications

1. Procédé de fabrication d'un collage au moyen d'un adhésif, une composition contenant au moins une substance réactive dans une polyréaction radicalaire et une substance catalytiquement active étant utilisée en tant qu'adhésif, **caractérisé en ce que**
au moins un complexe métallique du groupe des phtalocyanines de métaux et/ou du groupe de porphyrines de métaux est choisi en tant que substance catalytiquement active, une polyréaction de la substance réactive ayant lieu, qui est initiée par l'action d'un plasma.

2. Procédé selon la revendication 1, **caractérisé en ce qu'**une colle est utilisée pour le collage, dans laquelle l'adhésif se présente dans une matrice filmogène polymère.

3. Procédé selon la revendication 2, **caractérisé en ce que** la matrice filmogène polymère est un polymère thermoplastique, de préférence un polyuréthane thermoplastique ou un élastomère ou un élastomère thermoplastique.

4. Procédé selon l'une quelconque des revendications précédentes, **caractérisé en ce que** des épaississants sont ajoutés à l'adhésif.

5. Procédé selon l'une quelconque des revendications précédentes, **caractérisé en ce qu'**un ou plusieurs matériaux absorbants, notamment des zéolithes, sont ajoutés à l'adhésif ou à la colle.

6. Procédé selon l'une quelconque des revendications précédentes, **caractérisé en ce que** l'adhésif ou la colle est utilisé sous la forme d'un film.

7. Procédé selon l'une quelconque des revendications précédentes, **caractérisé en ce que** l'adhésif ou la colle présente des propriétés d'adhésivité de contact.

8. Procédé selon l'une quelconque des revendications précédentes, **caractérisé en ce que** ni l'adhésif ni la colle ne présente des propriétés d'adhésivité de contact.

9. Procédé selon l'une quelconque des revendications précédentes, **caractérisé en ce que** les métaux du complexe métallique ou des complexes métalliques sont choisis dans le groupe formé par le fer, le cobalt, le cuivre, le nickel, l'aluminium, le magnésium, le manganèse, l'étain, le zinc.

10. Procédé selon la revendication 9, **caractérisé en ce que** le fer est choisi en tant que métal.

11. Procédé selon l'une quelconque des revendications précédentes, **caractérisé en ce que** la phtalocyanine de fer (II) est choisie en tant que substance catalytiquement active.

12. Procédé selon l'une quelconque des revendications précédentes, **caractérisé en ce qu'**une ou plusieurs porphyrines de cobalt sont choisies en tant que substance catalytiquement active.

13. Procédé selon l'une quelconque des revendications précédentes, **caractérisé par** une atmosphère de gaz de procédé statique ou en écoulement.

14. Procédé selon l'une quelconque des revendications précédentes, **caractérisé en ce que** le plasma est formé sous pression atmosphérique.

15. Procédé selon l'une quelconque des revendications précédentes, **caractérisé en ce que** de l'air ou de la vapeur d'eau est utilisé en tant que gaz de procédé.

16. Procédé selon la revendication 15, **caractérisé en ce que** l'air contient de l'humidité.

17. Procédé selon au moins l'une quelconque des revendications précédentes, **caractérisé en ce que** des substances gazeuses réactives telles que de l'oxygène, de l'hydrogène, de l'ammoniac, de l'éthylène, du CO₂, des siloxanes, des acides acryliques et/ou des solvants, ainsi que des constituants de revêtement ou polymérisables, sont contenus dans le plasma ou ajoutés au plasma.

18. Procédé selon l'une quelconque des revendications précédentes, **caractérisé en ce que** l'adhésif ou la colle est moussé après l'activation par le plasma.
